# EUROPEAN PATENT APPLICATION

(11) **EP 2 608 158 A1**
(43) Date of publication of application: **26.06.2013**
(21) Application number: 11306741.7
(22) Date of filing: 22.12.2011
(51) Int. Cl.: G07C 9/00, H04B 13/00

(54) **Method to perform a transaction using a biometric reader and associated biometric reader**

(71) Applicant: Gemalto SA, 92190 Meudon (FR)
(72) Inventor: Thill, Michel, 92190 MEUDON (FR); Marseille, François-Xavier, 92190 MEUDON (FR)

(57) **Abstract**

The invention relates to a method to perform an electronic transaction 100 between a user carrying an authentication device 1 comprising an intrabody communication device 1a, a radio frequency communication device 1b and a memory storing reference biometric identification data, and a point-of-sale having a biometric reader 5 comprising a radio frequency transceiver 13. The method comprises presentation of a body part 3 to the biometric reader 5 by the user, collection of biometric identification data 9 from the presented body part 3, exchange of a radio frequency communication address 11 between the biometric reader 5 and the intrabody communication device (1a) through an intrabody channel *IC*, establishment of a remote short range point-to-point radio frequency connection 15 between the radio frequency communication device 1b and the transceiver 13 of the biometric reader 5, the biometric reader 5 sends the biometric identification data 9 through the remote short range point-to-point radio frequency connection 15 to the authentication device 1 for comparison of the biometric identification data 9 with the reference biometric identification data stored in the memory of the authentication device 1.

## Description

The invention relates to a method to perform a transaction using in particular a biometric reader and a user-carried portable communication device combining intrabody and short range communication.

In the domain of point-of-sale management, the appearing of remote and/or electronic transactions without physical cash money exchanges made the act of buying and paying more and more user-friendly.

One of the key aspects in the paying transactions is the security aspect, as both salesman and customer must be able to exchange crucial bank account related data. The usual electronic credit card requires a PIN code the user enters in a card reader which also reads the data contained on a chip of said card. This communication is not easily intercepted, which makes so-called "third party" attacks harder.

Third party attacks imply a third party intercepting the key data during the transaction. For example this would be in the credit card case by retrieving both account number and PIN code via (for example) a forged PIN code typepad and card reader that forwards the crucial data to the intercepting third party.

As this type of attacks is difficult to set up in the case of credit cards thanks to the PIN code system, they are more easily at use in remote payment systems and method, relying for example on RFID, Wideband or Ultra Wideband (UWB).

Also, the fact that to perform a transaction the user has to search, take-out from a wallet, purse or pocket his credit card and type in his PIN code leads to a time expensive payment procedure. This leads to queues at the cash-registers in most supermarkets.

It is known to use so called intrabody capacitive communication in addition to secure the transaction, see for example the eGo™ project (ego-project.eu).

The intrabody capacitive connection relies on a user-carried device, which has to be in contact or almost contact (less than a centimetre away) with the user's body. This user-carried device can be shaped for example as a necklace, a watch, a belt or embedded in clothes.

The intrabody communication (IC) device modifies the capacitance of the user's body to generate a signal that can be read by the corresponding capacitive detectors using the skin as a vector. Said capacitive detectors must be in contact or almost contact with the user, so that third party interception is made harder.

The IC signal is merely used as bootstrapping signal and possibly key data exchange way for a short range point-to-point connection, encrypted using the key data from the IC signal.

Nevertheless it is possible for a third party person to remain in discrete physical contact or almost contact with the user. For example in a crowd or queue, a discrete contact can be maintained in an unnoticeable fashion. Through this physical contact, the capacitive signal can be intercepted and the key data retrieved, thus making the UWB connection readable, and its encryption useless.

Two main interception scenarios have to be considered :
- the person performing the payment has no IC device and enters in physical contact with the next person in line carrying an IC device so as to use said IC device for performing the payment,
- the person performing the payment has an IC device and enters in physical contact (possibly without intention) with the next person in line carrying an IC device so that both IC devices try to connect with the payment facility, with a probability that the wrong IC device establishes the connection.

Therefore, intrabody capacitive communication, despite its potential to reduce overall waiting time at cash-registers is not sure enough to allow exchange of crucial data.

The use of combined short range communication and biometric identification is being researched (see e.g. Natural Security), but a major problem arises : the broadcasting of minutiae in the case of a fingerprint, or equivalent data, may still be intercepted. Such data is considered very private, and shall thus not be broadcast to multiple user devices. Also, since biometric identification is not a hundred percent reliable, there still remains a reduced probability that more than one device recognizes the minutiae (or equivalent) as corresponding to its owner if the data is broadcast to a large number of devices. Moreover, the fact that the receiver device on the side of the user is kept in a wake state (ready to respond) at all time makes said device particularly demanding in terms of energy.

In order to overcome the aforementioned drawbacks, the invention proposes a method to perform an electronic transaction between a user carrying an authentication device comprising an intrabody communication device, a radio frequency communication device and a memory storing reference biometric identification data, and a point-of-sale having a biometric reader comprising a radio frequency transceiver, with the steps :
- presentation of a body part to the biometric reader by the user, the biometric reader collecting biometric identification data from the presented body part,
- exchange of a radio frequency communication address between the biometric reader and the intrabody communication device through an intrabody channel,
- establishment of a remote short range point-to-point radio frequency connection between the radio frequency communication device and the transceiver of the biometric reader using the radio frequency communication address,
- the biometric reader sends the biometric identification data through the remote short range point-to-point radio frequency connection to the authentication device for comparison of the biometric identification data with the reference biometric identification data stored in the memory of the authentication device.

The method allows fast and secure payment of a transaction. In particular, the user does not have to take out and present a security token such as a credit card. This reduces the average time a customer might spend at the cash-registers, thus reducing the queue at said cash-registers.

The method may also present one or more of the following characteristics, taken separately or in combination.

If more than one authentication device tries to establish a short range point-to-point radio frequency connection with the biometric reader within a predetermined timeframe, the biometric reader aborts the transaction.

The biometric reader is one of the following :
- a fingerprint reader, the presented body part being at least one finger,
- an iris scanner, the presented body part being the user's forehead,
- a facial recognition system.

The step of exchanging a radio frequency communication address between the biometric reader and the intrabody communication device through the intrabody channel further comprises exchanging a key through the intrabody channel, and in that the remote short range point-to-point radio frequency connection is encrypted using said key.

Another object of the invention is the associated biometric reader comprising a radio frequency transceiver, characterized in that it comprises means to establish an intrabody channel with an intrabody communication device of an authentication device worn by a user, and in that it comprises means configured to :
- collect biometric identification data from the presented body part,
- exchange a radio frequency communication address with the intrabody communication device through an intrabody channel,
- establish a remote short range point-to-point radio frequency connection between the radio frequency communication device and the transceiver of the biometric reader,
- send the biometric identification data through the remote short range point-to-point radio frequency connection to the authentication device for comparison of the biometric identification data with the reference biometric identification data stored in the memory of the authentication device.

The biometric reader may also present one or more of the following characteristics, taken separately or in combination.

It comprises an intrabody signal receiver as means to establish the intrabody channel with the intrabody communication device located on a user actionable element of the biometric reader.

It may be a fingerprint reader, and the user actionable element is the fingerprint scanning surface on which the user applies his finger.

It may be an iris scanner, and the user actionable element is a forehead positioning and support structure.

The user actionable element may comprise conducting metal plate on which the user stands to present the body part.

The user actionable element may comprise button of the biometric reader pressed for the duration of the biometric reading.

Finally, the invention also relates to the authentication device destined to be carried by a user, comprising an intrabody communication device, a radio frequency communication device and a memory storing reference biometric identification data, characterized in that it comprises means configured to :
- exchange a radio frequency communication address with a biometric reader via the intrabody communication device through an intrabody channel,
- establish a remote short range point-to-point radio frequency connection between the radio frequency communication device and the biometric reader,
- receive the biometric identification data through the remote short range point-to-point radio frequency connection to the biometric reader,
- compare the biometric identification data with the reference biometric identification data stored in the memory.

The means configured to exchange a radio frequency communication address with the biometric reader through the intrabody channel of said device may further be configured to exchange a key through the intrabody channel, and the means configured to establish a remote short range point-to-point radio frequency connection between the radio frequency communication device and the transceiver of the biometric reader using the exchanged radio frequency communication address may further be configured to encrypt said remote short range point-to-point radio frequency connection using said key.

Other advantages and characteristics of the invention will appear at the reading of the description of the following figures, given merely as examples of preferred embodiments in a non-limiting fashion, among which:
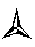 Figure 1 is a schematic view of some elements implied in the method,
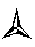 Figure 2 is a schematic representation of one embodiment of the method,
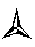 Figure 3 is a schematic view of the elements implied in a particular step of the method.

In all figures the same references relate to the same elements.

The invention relates to a method to perform a transaction using in particular a biometric reader and a user-carried portable communication device combining intrabody and short range communication.

Also, the method can be adapted to other situations where numerous people have to undergo an authentication at a station with limited capacity, while gathering an exhaustive biometric data bank internally accessible is impossible or too demanding. For example this is the case of a boarding gate at an airport, or of a ticket checkpoint at a train or subway station.

As used herein the term intrabody communication device designates an object comprising means of communication using the user's body as a transmission channel. For example, the intrabody communication can be capacitive, using capacitive coupling between a portable device worn by the user, generally with skin contact, and a reader which the user enters in physical contact with.

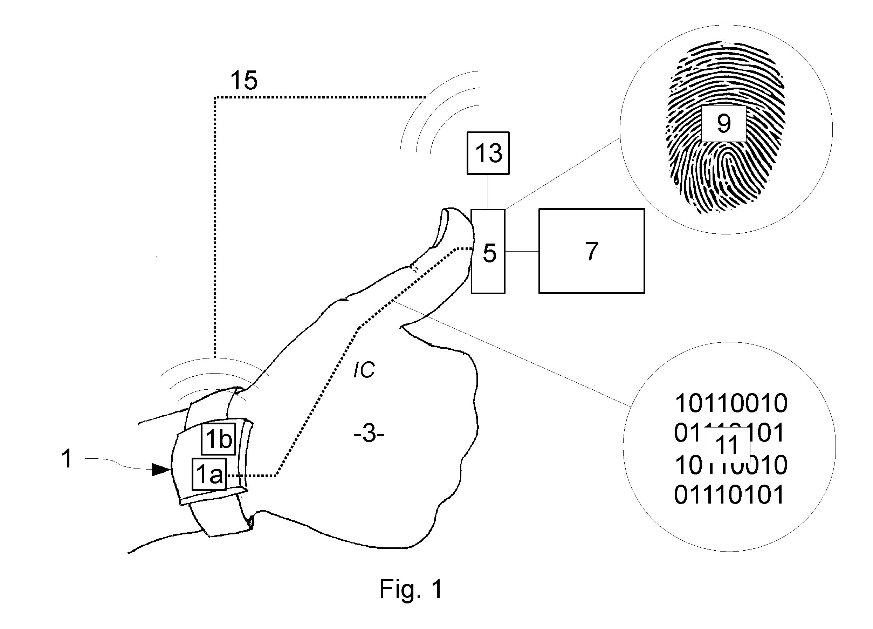

On figure 1 are represented different elements intervening in the payment procedure. On said figure 1, the user carries a portable authentication device 1, comprising an intrabody communication device la and a short range radio frequency communication device 1b, shown here for example integrated in a wristwatch.

Alternative embodiments of the authentication device 1 comprise clothes in which the circuitry is embedded, belts, necklaces, bracelets and any form of worn items in regular contact with the skin or close to it.

The authentication device 1 also usually comprises a central processing unit (CPU), and a memory for storing data.

On figure 1, the user carrying the authentication device 1 is presenting a part of his body 3 to a biometric reader 5, connected to a facility 7 with restricted using conditions, here in form of a point-of-sale cash register where confirmation of payment is required. As an alternative, the facility 7 which the biometric reader 5 can be connected to may be one of various elements, such as a door with restricted access conditions, a boarding gate in an airport and the like.

The biometric reader comprises means to establish and sustain an intrabody channel *IC*. The user's body part 3 is here the hand, more particularly a finger (the thumb) as the biometric reader 5 is chosen to be a fingerprint reader.

The means to establish and sustain an intrabody channel *IC* usually comprise a surface capacitor coupled with the intrabody communication device la via the user's body.

Via the application of the body part 3, the biometric reader 5 collects biometric identification data 9. Through an intrabody channel *IC* the biometric reader also exchanges in parallel a radio frequency address 11, with the portable authentication device 1, along with data such as a public key and identifiers of facility 7.

Different embodiments foresee that either the address of the biometric reader 5 is sent to the authentication device 1 or that the address of the authentication device 1 is sent to the biometric reader 5.

The authentication device 1 also comprises a short range communication device 1b as mentioned, for example an ultra wide band (UWB), infrared or Bluetooth^{®} transceiver for higher rate data exchange, and the biometric reader 5 is connected to a corresponding transceiver 13, forming short range point-to-point communication means between the reader 5 and the authentication device 1, for dialogue.

The resulting remote short range point-to-point communication 15 is initiated using the address 11 and possibly encrypted using keys exchanged in parallel to the address 11 through the intrabody channel *IC* upon ending of the address 11 exchange.

In case the biometric reader 5 is not a fingerprint reader, the applied body part 3 changes accordingly.

The particular choice of a fingerprint reader 5 is advantageous in that the reading of the biometric data 9 requires physical contact, so that the fingerprint scanning surface on which the user applies his finger can also serve as intrabody signal receiver : presenting the body part 3 and establishing the intrabody channel *IC* happens simultaneously in a single motion.

Also, the intrabody channel *IC* can run through a different body part then the applied one 3. This is achieved by putting the means to establish and sustain an intrabody channel *IC* on a user actionable element of the biometric reader 5 used to initiate the authentication process.

For example the user can be prompted to press for the duration of the biometric reading a button of reader 5 on which the intrabody communication receiving means are integrated, the intrabody channel *IC* running through the finger pressing the button.

If the biometric reader 5 is a facial recognition system, the ground underneath or next to the biometric reader 5 can act as intrabody signal receiver, for example using a conducting metal plate on which the user stands to present the body part 3, namely his face, to be read for biometric identification data 9. In that case the intrabody channel *IC* runs through the user's foot soles. Alternate embodiments could imply a door handle the user touches as IC receiver, or a dedicated surface on which the user applies a hand.

For example if the biometric reader 5 is an iris scanner, the user can be invited to apply his forehead on a positioning and support structure that comprises the intrabody communication receiving and/or emitting means.

In order to further improve the security during an authentication, the biometric reader 5 is configured to abort the transaction in case more than one authentication device 1 tries to establish a remote short range point-to-point radio frequency connection 15 within a given predetermined time frame even before acquiring and submitting the biometric identification data 9.

In the case of a short range radio frequency communication device la bootstrapped on reception of the address 11 related to the biometric reader 5 (eGo™ case), the third party interception is done by a physical contact between the user carrying the authentication device 1 and the third party person. This leads this third party person's authentication device 1 to receive the address 11 and thus to try and perform a short range communication 15 build-up simultaneously to the legitimate one 1.

This abortion allows to prevent the substitution of a fraudulent authentication device 1 to the legitimate one in the point-to-point radio frequency connection 15 when transmitting the identification data 9. In case a fraudulent authentication device 1 would successfully substitute itself to the legitimate one 1, it would receive the biometric identification data 9 which could be used for stealing the user's identity.

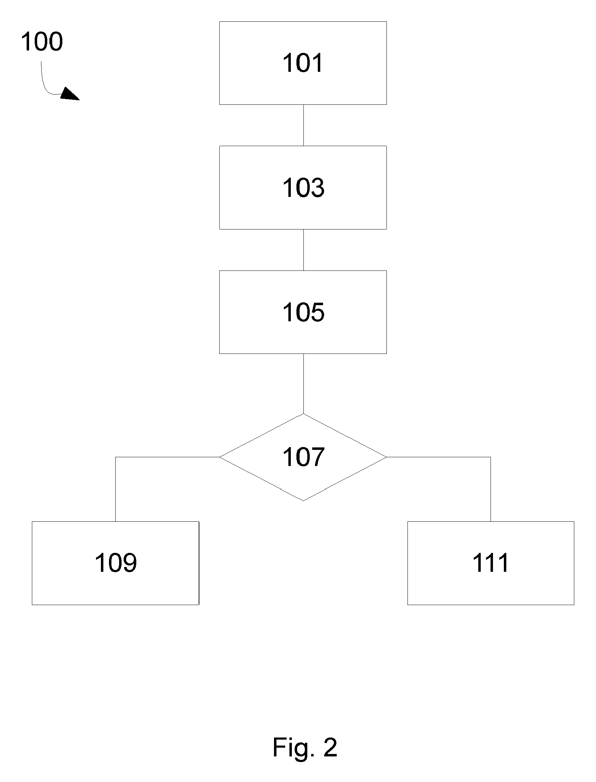

Figure 2 shows a schematic flow chart of an embodiment of the method 100.

First step 101 is the presentation of the body part 3 to the biometric reader 5, and establishment of the intrabody channel *IC*, possibly synchronously if the presented body part 3 is also the terminal portion of the intrabody channel *IC*.

This step can act as a trigger for the biometric reader 5 to send an activation signal to the intrabody communication device la to cause the authentication device 1 to start the radio frequency communication device 1b, thus allowing to put the radio frequency communication device 1b in a sleep or reduced consumption mode between authentications.

In case there is a separate body contact, through a second body part 3, to establish the intrabody channel *IC*, for example stepping on a conductive plate or pressing a button, said separate body contact may serve as a trigger event instead of the presentation itself, in particular if said presentation does not imply body contact (e.g. iris scanner, face recognition).

In the next step 103, the biometric reader 5 acquires the biometric data 9 from the presented body part 3, and exchanges the bootstrapping data 11 with the intrabody communication device 1a via the intrabody channel *IC*, in order to set up the higher speed wireless short range connection 15.

In this step 103, the biometric reader 5 may if needed also process the acquired biometric data 9, for example by identifying and encoding digitally the minutiae of the acquired fingerprint image, the wavelet transform of the acquired iris pattern or the landmarks of the user's face.

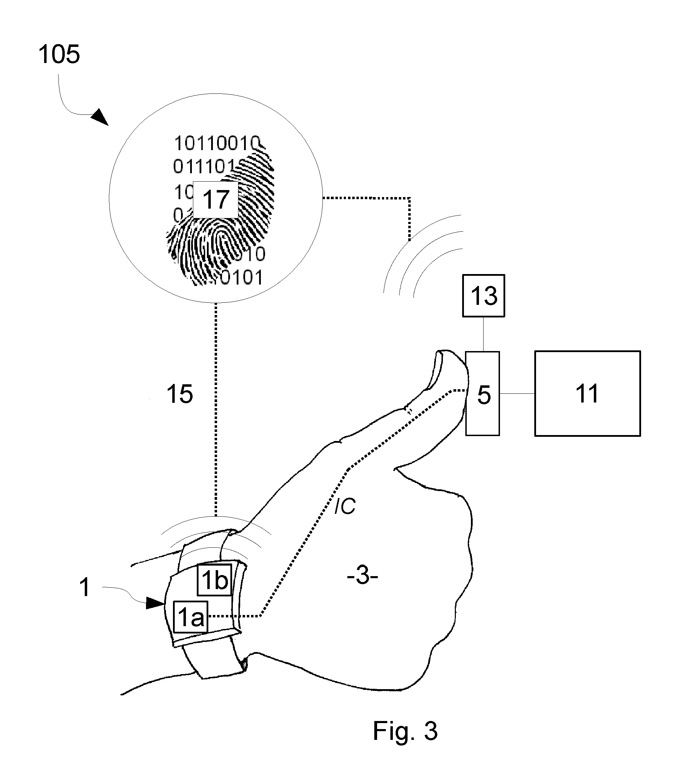

The following step 105 is shown in further details in figure 3. In this step the higher speed short range connection 15 is set up, and the biometric reader 5 uses said connection 15 to send the biometric identification data in an encrypted form 17. In particular, the encryption is here done using the keys exchanged with the address 11 for initiation of the short range radio frequency connection 15.

Referring again to figure 2, the step afterwards 107 is the comparison of the submitted, decrypted biometric identification data 9 with some reference biometric data stored in the memory of the authentication device 1, for example a fingerprint stored during the initiation of said authentication device 1 at the bank or the device's manufacturer's site or selling point.

In particular, in case of asymmetric cryptography the public and private key along with the reference biometric identification data are contained in the memory of the authentication device 1. The decryption using the private key and the comparison are performed internally by the authentication device 1, so that all keys and the not encrypted biometric identification data 9 need not to be communicated (and hence potentially intercepted) to any further device.

If the submitted biometric identification data 9 and the reference data correspond, case 109, the user is authenticated as legitimate wearer and user of the authentication device 1, thus granting access or payment to the facility 7 connected to the biometric reader 5.

If the submitted biometric identification data 9 and the reference data do not correspond, case 111, the user is not authenticated as legitimate wearer and user of the authentication device 1, thus denying access or payment to the facility or point of sale 7 connected to the biometric reader 5.

In said non-correspondence case 111, the process may be started again in a loop, and said loop can be interrupted after a certain number of failed authentication trials for security reasons, possibly leading the authentication device 1 to enter a lock-down or alert mode, in which no transaction is possible and/or leads to an alert display if attempted, until an accredited entity (bank or manufacturer) reinitiates the authentication device 1.

The invention thus allows to further secure the transactions and authentications using intrabody communication by integrating in the authentication a biometry identification process. In the eventuality that a third party attacker is able to retrieve some information, he cannot use said retrieved information since the rightful user's biometric features (fingerprint, iris pattern, face characteristics) are required for authentication.

Also, the fact that the minutiae or other biometric identification data are only sent once a point-to-point connection with a single authentication device 1 has successfully been established ensures that no third party interceptor is able to retrieve the biometric identification data 9, in particular in unencrypted form.

Moreover, the user only manipulates the reader 5, while the data transfer between the authentication device 1 and the reader 5 happens in a transparent, almost unnoticeable way for the user. Thus the time loss usually required to search, take out and present a security token (e.g. credit card) is overcome.

Another advantage is that the radio frequency communication device 1b can be kept in a sleep modus, leaving only the much less power consuming intrabody communication device la in listening state. This makes sense when considering that maintaining a capacitive intrabody communication device la in listening ("ready") state consumes up to fifty times less energy than for a UWB or RFID transmitter.

## Claims

1. Method to perform an electronic transaction (100) between a user carrying an authentication device (1) comprising an intrabody communication device (1a), a radio frequency communication device (1b) and a memory storing reference biometric identification data, and a point-of-sale having a biometric reader (5) comprising a radio frequency transceiver (13), with the steps :
- presentation of a body part (3) to the biometric reader (5) by the user, the biometric reader (5) collecting biometric identification data (9) from the presented body part (3),
- exchange of a radio frequency communication address (11) between the biometric reader (5) and the intrabody communication device (1a) through an intrabody channel (*IC*),
- establishment of a remote short range point-to-point radio frequency connection (15) between the radio frequency communication device (1b) and the transceiver (13) of the biometric reader (5) using the exchanged radio frequency communication address (11),
- the biometric reader (5) sends the biometric identification data (9) through the remote short range point-to-point radio frequency connection (15) to the authentication device (1) for comparison of the biometric identification data (9) with the reference biometric identification data stored in the memory of the authentication device (1).

2. Method according to claim 1, **characterized in that** if more than one authentication device (1) tries to establish a remote short range point-to-point radio frequency connection (15) with the biometric reader (5) within a predetermined time frame, the biometric reader (5) aborts the transaction.

3. Method according to claim 1, **characterized in that** the biometric reader (5) is one of the following:
- a fingerprint reader, the presented body part (3) being at least one finger,
- an iris scanner, the presented body part (3) being the user's forehead,
- a facial recognition system.

4. Method according to any of the precedent claims, **characterized in that** the step of exchanging a radio frequency communication address (11) between the biometric reader (5) and the intrabody communication device (1a) through the intrabody channel (*IC*) further comprises exchanging a key through the intrabody channel (*IC*), and **in that** the remote short range point-to-point radio frequency connection (15) is encrypted using said key.

5. Biometric reader (5) comprising a radio frequency transceiver (13), **characterized in that** it comprises means to establish an intrabody channel (*IC*) with an intrabody communication device (1a) of an authentication device (1) worn by a user, and **in that** it comprises means configured to :
- collect biometric identification data (9) from the presented body part (3),
- exchange a radio frequency communication address (11) with the intrabody communication device (1a) through an intrabody channel (*IC*),
- establish a remote short range point-to-point radio frequency connection (15) between the radio frequency communication device (1b) and the transceiver (13) of the biometric reader (5) using the exchanged radio frequency communication address (11),
- send the biometric identification data (9) through the remote= short range point-to-point radio frequency connection (15) to the authentication device (1) for comparison of the biometric identification data (9) with the reference biometric identification data stored in the memory of the authentication device (1).

6. Biometric reader (5) according to claim 5, **characterized in that** the biometric reader (5) comprises an intrabody signal receiver as means to establish the intrabody channel (*IC*) with the intrabody communication device (1a) located on a user actionable element of the biometric reader (5).

7. Biometric reader (5) according to claim 5, **characterized in that** it is a fingerprint reader, and **in that** the user actionable element comprises the fingerprint scanning surface on which the user applies his finger.

8. Biometric reader (5) according to claim 5, **characterized in that** it is an iris scanner, and **in that** the user actionable element comprises a forehead positioning and support structure.

9. Biometric reader (5) according to claim 5, **characterized in that** the user actionable element comprises a conducting metal plate on which the user stands to present the body part (3).

10. Biometric reader (5) according to claim 6, **characterized in that** the user actionable element comprises a button of the biometric reader (5) pressed for the duration of the biometric reading.

11. Biometric reader (5) according to any of the precedent claims, **characterized in that** the means configured to exchange a radio frequency communication address (11) with the intrabody communication device (1a) through the intrabody channel (IC) are further configured to exchange a key through the intrabody channel (IC), and **in that** the means configured to establish a remote short range point-to-point radio frequency connection (15) between the radio frequency communication device (1b) and the transceiver (13) of the biometric reader (5) using the exchanged radio frequency communication address (11) are further configured to encrypt said remote short range point-to-point radio frequency connection (15) using said key.

12. Authentication device (1) destined to be carried by a user, comprising an intrabody communication device (1a), a radio frequency communication device (1b) and a memory storing reference biometric identification data, **characterized in that** it comprises means configured to :
- exchange a radio frequency communication address (11) with a biometric reader (5) via the intrabody communication device (1a) through an intrabody channel (*IC*),
- establish a remote short range point-to-point radio frequency connection (15) between the radio frequency communication device (1b) and the biometric reader (5) using the exchanged radio frequency communication address (11),
- receive the biometric identification data (9) through the remote short range point-to-point radio frequency connection (15) to the biometric reader (5),
- compare the biometric identification data (9) with the reference biometric identification data stored in the memory.

13. Authentication device (1) according to claim 12, **characterized in that** the means configured to exchange a radio frequency communication address (11) with the biometric reader (5) through the intrabody channel (IC) are further configured to exchange a key through the intrabody channel (IC), and **in that** the means configured to establish a remote short range point-to-point radio frequency connection (15) between the radio frequency communication device (1b) and the transceiver (13) of the biometric reader (5) using the exchanged radio frequency communication address (11) are further configured to encrypt said remote short range point-to-point radio frequency connection (15) using said key.
